# EUROPÄISCHE PATENTSCHRIFT

(11) **EP 2 349 931 B1**
(45) Veröffentlichungstag und Bekanntmachung des Hinweises auf die Patenterteilung: **05.12.2018**
(21) Anmeldenummer: 09737344.3
(22) Anmeldetag: 07.10.2009
(51) Int. Cl.: C01G 23/00, H01M 4/36, H01M 4/48, H01M 4/62, B82Y 30/00, C04B 35/626, C04B 35/628, C04B 35/636, H01M 4/485, H01M 10/052

(54) **KOHLENSTOFFBESCHICHTETER LITHIUMTITAN-SPINELL**
CARBON-COATED LITHIUM TITANIUM SPINEL
SPINELLE DE TITANE LITHIÉ REVÊTU DE CARBONE

(30) Priorität: 07.10.2008 DE 102008050692
(43) Veröffentlichungstag der Anmeldung: 03.08.2011
(73) Patentinhaber: Johnson Matthey PLC, London EC4A 4AB (GB)
(72) Erfinder: DOLLINGER, Jasmin, 85356 Freising (DE); POLLNER, Andreas, 85368 Moosburg (DE); HOLZAPFEL, Michael, 85354 Freising (DE); TRAN, Nicolas, 85354 Freising / Achering (DE); SCHALL, Norbert, 85659 Forstern (DE); EISGRUBER, Max, 84079 Bruckberg (DE)
(74) Vertreter: Gleave, Robert James
(86) Internationale Anmeldenummer: PCT/EP2009/007196
(87) Internationale Veröffentlichungsnummer: WO 2010/040516

(56) Entgegenhaltungen:
- WO-A2-02/46101
- G.J. WANG, J. GAO, L.J. FU, N.H. ZHAO, Y.P. WU, T. TAKAMURA: "Preparation and characteristic of carbon-coated Li4Ti5O12 anode material" JOURNAL OF POWER SOURCES, Bd. 174, Nr. 2, 26. Juni 2007 (2007-06-26) , Seiten 1109-1112, XP002569131

## Beschreibung

Die vorliegende Erfindung betrifft kohlenstoffbeschichtetes Lithiumtitanat Li₄Ti₅O₁₂ sowie ein Verfahren zu dessen Herstellung.

Die Verwendung von Lithiumtitanat Li₄Ti₅O₁₂ oder kurz Lithiumtitan-Spinell wird seit einiger Zeit insbesondere als Ersatz für Graphit als Anodenmaterial in wiederaufladbaren Lithium-Ionen-Batterien vorgeschlagen.

Eine aktuelle Übersicht über Anodenmaterialien in derartigen Batterien findet sich z.B. in: Bruce et al., Angew.Chem.Int.Ed. 2008, 47, 2930-2946.

Die Vorteile von Li₄Ti₅O₁₂ gegenüber Graphit sind insbesondere dessen bessere Zyklenbeständigkeit, seine bessere thermische Belastbarkeit sowie die höhere Betriebssicherheit. Li₄Ti₅O₁₂ weist eine relativ konstante Potentialdifferenz von 1,55 V gegenüber Lithium auf und erreicht mehrere 1000 Lade- und Entladezyklen mit einem Kapazitätsverlust von <20 %.

Damit zeigt Lithiumtitanat ein deutlich positiveres Potential als Graphit, der bislang üblicherweise in wiederaufladbaren Lithium-Ionen-Batterien als Anode verwendet wird.

Allerdings ergibt sich durch das höhere Potential auch eine niedrigere Spannungsdifferenz. Zusammen mit einer verringerten Kapazität von 175 mAh/g verglichen mit 372 mAh/g (theoretischer Wert) von Graphit führt dies zu einer deutlich niedrigeren Energiedichte im Vergleich zu Lithium-Ionen-Batterien mit Graphitanoden.

Allerdings weist Li₄Ti₅O₁₂ eine hohe Lebensdauer auf und ist ungiftig und daher auch nicht als umweltgefährdend einzustufen.

Seit kurzem wird in Lithium-Ionen-Batterien LiFePO₄ als Kathodenmaterial verwendet, so dass in einer Kombination von Li₄Ti₅O₁₂ und LiFePO₄ eine Spannungsdifferenz von 2 V erzielt werden kann.

Die Herstellung von Lithiumtitanat Li₄Ti₅O₁₂ ist in vielerlei Hinsicht ausführlich beschrieben. Üblicherweise wird Li₄Ti₅O₁₂ mittels einer Festkörperreaktion zwischen einer Titanverbindung, typischerweise TiO₂, und einer Lithiumverbindung, typischerweise Li₂CO₃, bei hohen Temperaturen von über 750 °C erhalten, wie es in der US 5,545,468 oder in der EP 1 057 783 A1 beschrieben ist.

Ebenso werden Sol-Gel-Verfahren für die Herstellung von Li₄Ti₅O₁₂ beschrieben (DE 103 19 464 A1). Weiter werden Herstellungsverfahren mittels Flammpyrolyse (Flame Spray Pyrolysis) vorgeschlagen (Ernst, F.O. et al. Materials Chemistry and Physics 2007, 101(2-3, S. 372-378) sowie so genannte "Hydrothermalverfahren" in wasserfreien Medien (Kalbac, M. et al., Journal of Solid State Electrochemistry 2003, 8(1) S. 2-6).

Die US 2004/0202934 A1 beschreibt ein Verfahren zur Herstellung von Lithiumtitanatpartikeln Li₄Ti₅O₁₂ mit Spinellstruktur, die mit Kohlenstoff beschichtet sind. Gemäß diesem Verfahren wird zunächst eine homogene Dispersion aus Titanoxid, einem Lithiumsalz und Kohlenstoff hergestellt, die anschließend getrocknet und bei 400°C und schließlich 850°C kalziniert wird. Die so erhaltenen Partikeln haben einen Kohlenstoffgehalt von 1-10 Gew.-%, bezogen auf das Gesamtgewicht der Li₄Ti₅O₁₂-Teilchen, und eine Teilchengröße von 10 - 950 nm, wobei die Kohlenstoffbeschichtung 10 - 300 nm dick ist.

G.J. Wang et al. beschreiben Lithiumtitanatpartikeln Li₄Ti₅O₁₂ mit Spinellstruktur, die mit einer Kohlenstoffnanoschicht beschichtet sind. Diese werden hergestellt, indem Titanoxid (Anatas) und Lithiumcarbonat in einer Zuckerlösung enthaltend ein Gemisch aus Wasser und Alkohol dispergiert werden. Anschließend wird das Lösungsmittel entfernt und das erhaltene Pulver gemahlen, bevor das Pulver zunächst bei 750°C, danach bei 850°C in Gegenwart von Luft kalziniert wird.

Da das Lithiumtitanat als Elektrode typischerweise mit Kohlenstoff, insbesondere Graphit oder Ruß zu einer Elektrode verpresst wird, schlägt die EP 1 796 189 A2 vor, komplexe Lithiumübergangsmetalloxide ex situ, d.h. nach ihrer vollständigen Synthese mit einer kohlenstoffhaltigen Beschichtung zu versehen. Nachteilig bei diesem Verfahren ist jedoch die große Partikelgröße des enthaltenen Produkts, insbesondere die Sekundärpartikelgröße. Außerdem befindet sich die Kohlenstoffbeschichtung bei diesem Verfahren auf den Sekundär- und nicht auf den Primärpartikeln, was zu schlechten elektrochemischen Eigenschaften insbesondere hinsichtlich seines Kapazitätsverhalten führt.

Es bestand daher ein Bedarf, ein weiteres Lithiumtitanoxid, insbesondere ein Lithiumtitanat Li₄Ti₅O₁₂ bereitzustellen, das besonders kleinteilig ist und verbesserte elektrochemische Eigenschaften aufweist.

Erfindungsgemäß wird diese Aufgabe gelöst durch ein kohlenstoffhaltiges Lithiumtitanoxid, enthaltend sphärische (Sekundär)-Teilchenaggregate mit einem Durchmesser von 1-80 pm, bestehend aus mit Kohlenstoff beschichteten Lithiumtitanoxidprimärteilchen, wobei das Lithiumtitanoxid eine BET-Oberfläche im Bereich von 1 - 10 m²/g besitzt.

Die Begriffe "Partikel" und "Teilchen" werden vorliegend synonym verwendet.

Im Folgenden wird unter dem Begriff Lithiumtitanoxid ein Lithiumtitanat verstanden, das erfindungsgemäß alle Lithiumtitanspinelle vom Typ Li₁₊ₓTi₂₋ₓO₄ mit 0 ≤ x ≤ 1/3 der Raumgruppe Fd3m und generell auch sämtliche gemischten Lithiumtitanoxide der generischen Formel LiₓTi_{y}O (0 < x, y < 1) umfasst.

Das erfindungsgemäße kohlenstoffbeschichtete Lithiumtitanoxid besteht, wie gesagt, aus Sekundärpartikeln, die aus mit Kohlenstoff beschichteten Primärteilchen gebildet sind. Die Sekundärpartikel weisen eine sphärische Form auf.

Die erfindungsgemäße Teilchengröße der Sekundärteilchen führt dazu, dass die Stromdichte in einer Elektrode, die das erfindungsgemäße kohlenstoffbeschichtete Lithiumtitananoxidmaterial enthält besonders hoch ist und eine hohe Zyklenbeständigkeit aufweist verglichen mit den Materialien des Standes der Technik, insbesondere der EP 1796 189 A2.

Überraschenderweise wurde ebenfalls gefunden, dass das erfindungsgemäße kohlenstoffhaltige Lithiumtitanoxid eine BET-Oberfläche (gemessen nach DIN 66134) von 1-10 m²/g, bevorzugt < 10 m²/g, noch mehr bevorzugt < 8 m²/g und ganz besonders bevorzugt < 5 m²/g aufweist. Typische Werte liegen in einer ganz besonders bevorzugten Ausführungsform im Bereich von 3-5 m²/g.

Die mit Kohlenstoff beschichteten Primärteilchen weisen typischerweise eine Größe von < 1 µm auf. Wichtig ist erfindungsgemäß, dass die Primärteilchen klein und mindestens teilweise mit Kohlenstoff beschichtet sind, so dass die Strombelastbarkeit und die Zyklenbeständigkeit einer das erfindungsgemäße Lithiumtitanoxid enthaltenden Elektrode verglichen mit nicht-kohlenstoffbeschichteten Materialien bzw. nicht homogen beschichteten oder gegenüber Materialien, bei denen nur die Sekundärpartikel beschichtet sind besonders hoch ist.

In bevorzugten Ausführungsformen der vorliegenden Erfindung beträgt der Kohlenstoffgehalt des erfindungsgemäßen Lithiumtitanoxids 0,05 bis 2 Gew.-%, in ganz besonders bevorzugten Ausführungsformen 0,05 bis 0,5 Gew.-%.

Überraschenderweise wurde gefunden, dass relativ geringe Kohlenstoffgehalte, d.h. also eine relativ dünne Kohlenstoffbeschichtung der Primärpartikel ausreicht, um in Elektroden, die das erfindungsgemäße Material enthalten die vorstehend erwähnten vorteilhaften Effekte hervorzurufen.

Bevorzugt unter den Lithiumtitanoxiden ist Li₄Ti₅O₁₂ aufgrund seiner besonders guten Eignung als Elektrodenmaterial.

Die Aufgabe der vorliegenden Erfindung wird weiter gelöst durch ein Verfahren zur Herstellung von kohlenstoffhaltigem Lithiumtitanoxid umfassend die Schritte des
(a) Mischens eines Lithiumsalzes, eines Titanoxids und einer kohlenstoffhaltigen Verbindung in einem Lösungsmittel;
(b) Sprührocknens der Mischung aus Schritt a);
(c) Kalzinierens der getrockneten Mischung aus Schritt b) unter Schutzgasatmoshäre.

Je nach Verhältnissen des Lithiumsalzes zu Titanoxid können die wie vorstehend schon beschriebenen Lithiumtitanspinelle Li₁₊ₓTi₂₋ₓO₄ der Raumgruppe Fd3m bzw. die gemischten Lithiumtitanoxide der generischen Formel LiₓTi_{y}O erhalten werden.

Beim Mischen kann ebenfalls der endgültige Kohlenstoffgehalt des erfindungsgemäßen Lithiumtitanoxides eingestellt werden.

Der Begriff "Lösungsmittel" wird vorliegend so definiert, das mindestens ein Bestandteil der Ausgangsstoffe zumindest partiell in dem Lösungsmittel löslich ist, d.h. ein Löslichkeitsprodukt L von mindestens 0,5 aufweist. Das Lösungsmittel ist bevorzugt Wasser. In ganz besonders bevorzugten Ausführungsformen ist ein Bestandteil der Ausgangsstoffe gut löslich in Wasser, d.h. er weist ein Löslichkeitsprodukt L von mindestens 10 auf.

Besonders bevorzugt beträgt das Atomverhältnis von Li zu Ti 4:5, so dass insbesondere phasenreines Li₄Ti₅O₁₂ mit einer Kohlenstoffbeschichtung erhalten werden kann. Unter phasenrein wird vorliegend verstanden, dass im Rahmen der üblichen Meßgenauigkeit kein TiO₂ in der Rutilphase mittels XRD-Messungen nachweisbar ist.

Bevorzugt wird das Lithiumsalz zur Durchführung des erfindungsgemäßen Verfahrens ausgewählt aus der Gruppe bestehend aus LiOH, LiNO₃, Li₂CO₃, Li₂O, LiHCO₃, und Lithiumacetat, da aus diesen Ausgangsverbindungen besonders leicht eine wässrige Lösung hergestellt werden kann, zu der die anderen Ausgangsverbindungen zugegeben werden können.

Bevorzugt wird TiO₂ in Anatasform oder in amorphem Form eingesetzt, was sich durch das erfindungsgemäße Verfahren vorteilhafterweise nicht zu Rutil umsetzt.

Die kohlenstoffhaltigen Verbindungen die zur Durchführung des erfindungsgemäßen Verfahrens geeignet sind werden beispielsweise ausgewählt aus Kohlenwasserstoffen, wie beispielsweise polyzyklischen Aromaten und ihren Verbindungen, Perylen und seinen Verbindungen, Polymeren und Copolymeren wie beispielsweise Polyolefine, Polypropylencopolymere in Pulverform, Styrol-Polybutadien-Blockcopolymere, Zuckern und ihren Derivaten. Von den Polymeren sind insbesondere Polyolefine, Polybutadiene, Polyvinylalkohol, Kondensationsprodukte aus Phenol, von Furfuryl abgeleitete Polymere, Styrolderivate, Divinylbenzolderivate, Naphtholperylen, Acrylonitril und Vinylacetat, Gelatine, Zellulose, Stärke und deren Ester und Ether und ihre Mischungen bevorzugt.

Als ganz besonders bevorzugt zur Durchführung des erfindungsgemäßen Verfahrens hat sich die Auswahl von Zuckern erwiesen, da sich diese in Wasser besonders gut lösen. Unter den Zuckern sind ganz besonders bevorzugt Laktose, Sucrose und Saccharose, am meisten bevorzugt Laktose.

Der Trocknungsschritt b) erfolgt erfindungsgemäß in Form des sogenannten Sprühtrocknens, bei dem die erhaltene Mischung durch eine Düse fein versprüht wird und in Form eines Vorproduktes ausfällt. Andere Verfahren, bei denen die Ausgangsverbindungen homogen vermischt werden und anschließend in einem Gasstrom zur Trocknung eingebracht werden, sind beispielhaft genannt. Neben Sprühtrocknen sind dies beispielsweise das Trocknen im Fluidbett, rollierende Granulierung, das Trocknen oder Gefriertrocknen allein oder in Kombination. Das Sprühtrocknen erfolgt typischerweise in einem Temperaturgradienten von 90° - 300 °C.

Nach Erhalt des getrockneten Produktes der wässrigen Mischung aus Schritt a), was vorteilhafterweise auch die Lösungsmittelsproblematik anderer Verfahren des Standes der Technik vermeidet, wird das erhaltene sprühgetrocknete Vorprodukt bei einer Temperatur von 700 bis 1000 °C kalziniert, erfindungsgemäß unter einer Schutzgasatmosphäre um eventuelle Nebenreaktionen beim Kalzinieren, die zu unerwünschten Produkten führen könnten, zu vermeiden, wie z.B. die Oxidation der Kohlenstoffbeschichtung. Geeignete Schutzgase sind z.B. Stickstoff, Argon usw. bzw. deren Mischungen.

Ein Litiumtitanoxid erhältlich durch das erfindungsgemäße Verfahren, zeichnet sich durch eine besonders niedrige BET-Oberfläche und eine geringe Teilchengröße der Primärpartikel sowie der aus den Primärpartikeln gebildeten Sekundärpartikel aus, wie es weiter oben schon beschrieben wurde.

Das Problem der vorliegenden Erfindung wird weiter gelöst durch eine Elektrode, die das kohlenstoffbeschichtete erfindungsgemäße Lithiumtitanoxid enthält. Bevorzugt ist die Elektrode eine Anode. Insbesondere wurde hier gefunden, dass eine derartige Elektrode in einer Lithiumsekundärionenbatterie ein Kapazitätsverhältnis zwischen 1C und 4C von > 85 % und eine Entladekapazität von mindestens 165 mAh/g bei C/10 aufweist.

Die vorliegende Erfindung ist nachstehend anhand der Ausführungsbeispiele sowie der Figuren näher erläutert ohne dass diese als einschränkend verstanden werden sollen.

Es zeigen:
- Fig. 1: Eine SEM-Aufnahme von erfindungsgemäßem kohlenstoffbeschichtetem Li₄Ti₅O₁₂;
- Fig. 2: das Schaubild der Lade- und Entladekapazität einer Elektrode enthaltend ein erfindungsgemäßes (in-situ) kohlenstoffbeschichtetes Lithiumtitanat;
- Fig. 3: die Lade- und Entladekapazität von ex-situ beschichtetem Lithiumtitanat als Vergleich;
- Fig. 4: eine SEM-Aufnahme eines nachträglich (ex-situ) kohlenstoffbeschichteten Li₄Ti₅O₁₂;
- Fig. 5: eine SEM Aufnahme von unbeschichtetem Li₄Ti₅O₁₂;
- Fig. 6: die Lade- und Entladekapazität des unbeschichteten Li₄Ti₅O₁₂; der Strom bei der Ladung und bei der Entladung war gleich.

### Ausführungsbeispiele:

### 1. Allgemeines

Als Ausgangsprodukte werden nachstehend LiOH·H₂O sowie TiO₂ in Anatasform verwendet. Der Wassergehalt bei kommerziell erhältlichem LiOH·H₂O (Firma Merck) schwankt von Charge zu Charge und wurde vor der Synthese bestimmt.

Eine Suspension aus LiOH/TiO₂/Laktose wurde bei 30 - 35 °C hergestellt, indem zuerst LiOH·H₂O in Wasser gelöst wurde und anschließend TiO₂ in Anatasform sowie Laktose unter Rühren zugegeben wurden:

### Beispiel 1:

### Herstellung des erfindungsgemäßen Lithiumtitanats (Li₄Ti₅O₁₂)

9,2 kg LiOH·H₂O wurden in 45 l Wasser gelöst und anschließend 20,8 kg TiO₂ zugegeben. Es wurden nun verschiedene Mengen Laktose zugegeben. Die Laktosemenge wurde weiter variiert und zwar wurden Ansätze mit 30 g Laktose/kg LiOH+TiO₂ 60 g Laktose/kg LiOH+TiO₂ 90 g Laktose/kg LiOH+TiO₂ gefahren, um die Menge an Kohlenstoff im erfindungsgemäßen Lithiumtitanat zu variieren.

Es wurde überraschenderweise gefunden, dass die Laktose den Effekt aufwies, die Viskosität der ursprünglichen Suspension zu vermindern, so dass 25 % weniger Wasser zur Herstellung einer entsprechenden Suspension verwendet werden mussten, als im Fall ohne der Zugabe der Laktose. Anschließend wurde die Mischung in einem Nubilosa-Sprühtrockner bei einer Eingangstemperatur von ca. 300 °C und einer Ausgangstemperatur von 100 °C sprühgetrocknet.

Es bildeten sich zunächst poröse sphärische Aggregate in der Größenordnung von mehreren Mikrometern.

Anschließend wurde das so erhaltene Produkt bei 800 °C für eine Stunde unter Stickstoffatmosphäre kalziniert. Es wurden große (1 - 80 µm) Aggregate aus aggregierten Primärpartikeln (Teilchengröße der Primärpartikel < 1 µm) erhalten.

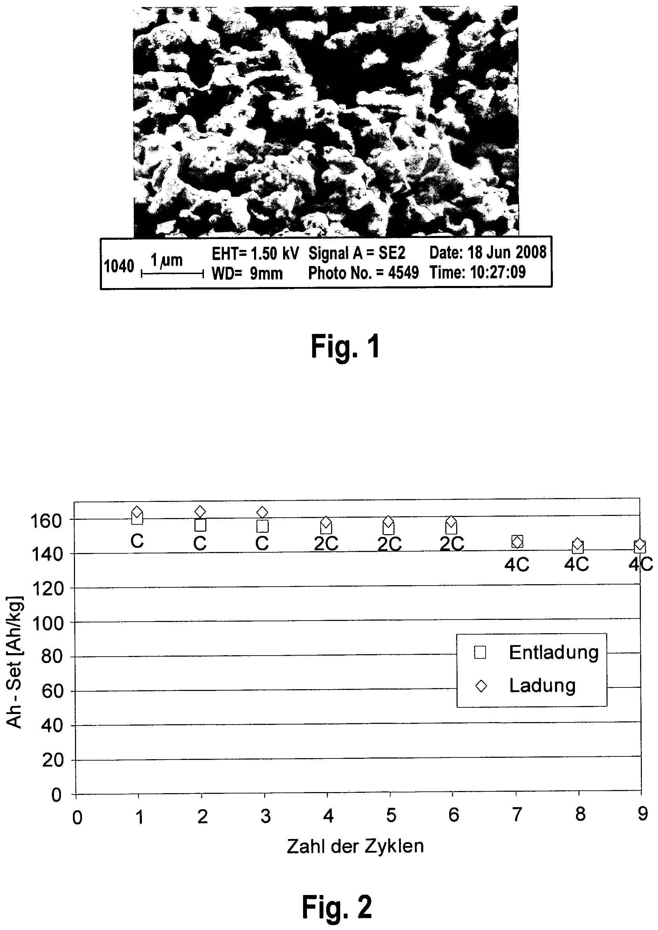

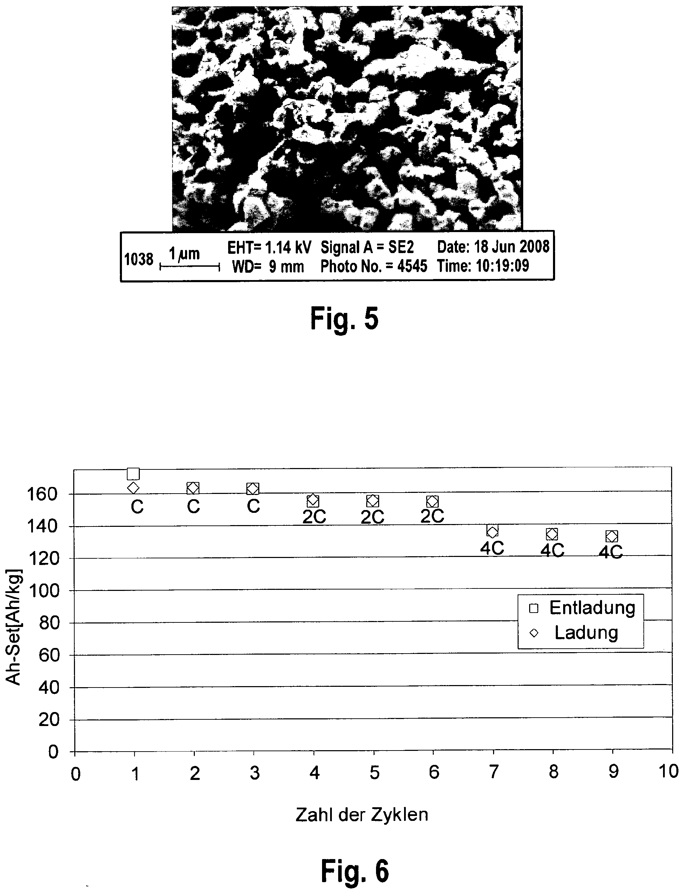

Fig. 1 zeigt das kohlenstoffbeschichtete erfindungsgemäße Lithiumtitanat mit 0,2 Gew.-% Kohlenstoffgesamtgehalt (60 g Laktose/kg LiOH+TiO₂), Fig. 5 zeigt demgegenüber eines ebenfalls mittels Sprühtrocknung erhaltenes nicht beschichtetes Lithiumtitanat. Die kohlenstoffhaltige Verbindung in den Ausgangsprodukten des erfindungsgemäßen Verfahrens wirkt als Sinterungsinkubator und führt zu deutlich kleineren Partikeln.

### Vergleichsbeispiel:

Es wurde gemäß dem Verfahren aus Beispiel 1 nicht beschichtetes Lithiumtitanat hergestellt, d.h. ohne Zugabe von Laktose.

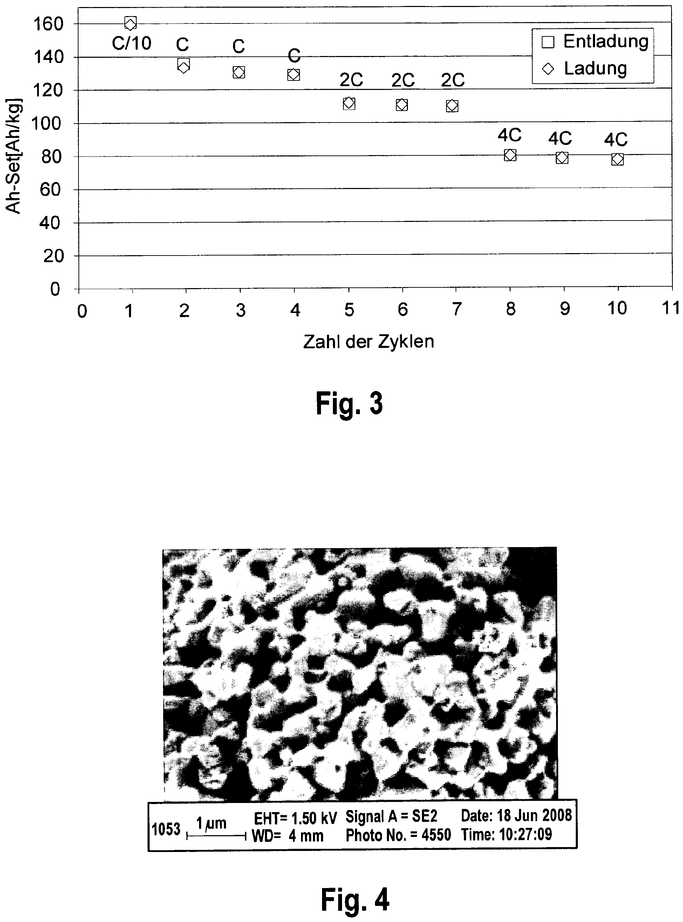

Das so erhaltene und kalzinierte Lithiumtitanat wurde anschließend über 3 h mit Laktoselösung imprägniert und bei 750 °C für 3 h erhitzt (s. EP 1 796 198 A2). Eine SEM - Aufnahme des Produkts ist in Fig. 4 dargestellt und zeigt verglichen mit dem erfindungsgemäßen Produkt gemäß der Figur 1 deutlich gröbere Teilchen, die auch nicht aus Primärpartikeln mit einer Größe < 1 µm bestehen sondern aus größeren zusammengesinterten Primärpartikeln. Darüberhinaus weisen die Sekundärpartikel des Vergleichsbeispiels eine "verschmierte" Beschichtung auf. Der Kohlenstoffgehalt betrug ebenfalls ca. 0.2 Gew.-%.

Anschließend wurde Ladungs-/Entladungszyklen mit dem erfindungsgemäßen Material sowie mit dem Material der Vergleichsbeispiele, d.h. mit der nachträglich beschichtetem Lithiumtitanat (gem. der EP 1 796 198 A2) sowie mit dem nichtbeschichtetem Lithiumtitanat, die beide mittels des gleichen Verfahrens erhalten wurden, durchgeführt.

Die Anode bestand jeweils aus 85 % aktivem Material, 10 % Super-P Ruß und 5 % PVDF 21256-Binder. Die Messungen erfolgten mit dem erfindungsgemäßen Material bzw. Vergleichsmaterialien als Anode in einer Halbzelle gegen metallisches Lithium. Der Aktivmassegehalt der Elektrode betrug 2,2 mg/cm². Der bei den Zyklen durchfahrene Bereich betrug 1,0 - 2,0 Volt. Fig. 2 zeigt Ladungs-/Entladungskurven von erfindungsgemäßem kohlenstoffbeschichteten Lithiumtitanat, wobei das Kapazitätsverhältnis zwischen 1C und 4C 87,5 % betrug; der Strom bei der Ladung und bei der Entladung war gleich.

Gegenüber dem nichtbeschichteten Lithiumtitanat ist eine deutliche Stabilität zu beobachten, das gemäß Fig. 6 ein entsprechendes Kapazitätsverhalten von 82 % aufweist.

Ebenso ist gegenüber einem ex-situ beschichtetem Lithiumtitanat (Fig. 3) das erfindungsgemäße Material besser, bei dem nur 75 % der Kapazität bei 4C gemessen wurden. Der Strom bei der Ladung und bei der Entladung war gleich.

Die Ergebnisse zeigen also, dass das beschichtete erfindungsgemäße in-situ kohlenstoffbeschichtete Lithiumtitanat größere Vorteile hinsichtlich seines Kapazitätsverhältnisses gegenüber einer nachträglich aufgebrachten Kohlenstoffbeschichtung bzw. nichtbeschichtetem Lithiumtitanat aufweist.

## Patentansprüche

1. Kohlenstoffhaltiges Litihiumtitanoxid enthaltend sphärische Teilchenaggregate mit einem Durchmesser von 1 bis 80 pm, die aus mit Kohlenstoff beschichteten Lithiumtitanoxidprimärteilchen bestehen, wobei das Lithiumtitanoxid eine BET-Oberfläche im Bereich von 1 - 10 m²/g besitzt.

2. Lithiumtitanoxid nach Anspruch 1 mit einer Primärteilchengröße von < 1 µm.

3. Lithiumtitanoxid nach Anspruch 2 mit einem Kohlenstoffgehalt von 0,05 bis 2 Gew.-%.

4. Lithiumtitanoxid nach Anspruch 3 mit einem Kohlenstoffgehalt von 0,05 bis 0.5 Gew.-%.

5. Lithiumtitanoxid nach einem der vorangehenden Ansprüche, wobei das Lithiumtitanoxid Li₄Ti₅O₁₂ ist.

6. Verfahren zur Herstellung von kohlenstoffhaltigem Lithiumtitanoxid nach einem der Ansprüche 1 bis 5, umfassend die Schritte des:
(a) Mischens eines Lithiumsalzes, eines Titanoxids und einer kohlenstoffhaltigen Verbindung in einem Lösungsmittel;
(b) Sprühtrocknens der Mischung aus Schritt a); und
(c) Kalzinierens der getrockneten Mischung aus Schritt b) unter Schutzgasatmosphäre.

7. Verfahren nach Anspruch 6, wobei das Lösungsmittel Wasser ist.

8. Verfahren nach Anspruch 7, wobei das Atomverhältnis Li/Ti auf 4:5 eingestellt wird.

9. Verfahren nach Anspruch 7 oder 8, wobei das Lithiumsalz ausgewählt wird aus der Gruppe bestehend aus LiOH, Li₂O, LiNO₃, LiHCO₃, LiCH₃COO.

10. Verfahren nach Anspruch 8, wobei das TiO₂ in Anatasform oder in amorpher Form verwendet wird.

11. Verfahren nach Anspruch 10, wobei die kohlenstoffhaltige Verbindung ausgewählt wird aus der Gruppe bestehend aus Kohlenwasserstoffen und ihren Derivaten, Kohlenhydraten und ihren Derivaten und Polymeren.

12. Verfahren nach Anspruch 11, wobei die kohlenstoffhaltige Verbindung ausgewählt wird aus Zuckern der Gruppe bestehend aus Laktose, Sucrose und Saccharose.

13. Verfahren nach Anspruch 6, wobei das Sprühtrocknen bei einem Temperaturgradienten von 90 - 350 °C durchgeführt wird.

14. Verfahren nach einem der vorgehenden Ansprüche, wobei das Kalzinieren bei einer Temperatur von 700 bis 1000 °C durchgeführt wird.

15. Elektrode, enthaltend das kohlenstoffhaltige Lithiumtitanoxid nach einem der Ansprüche 1 bis 5.

16. Lithiumsekundärionenbatterie enthaltend eine Elektrode nach Anspruch 15.

17. Lithiumsekundärionenbatterie nach Anspruch 16 mit einer Ladungs-/Entladungskapazität bei C/10 von > 165 mAh/g.

## Claims

1. Carbon-containing lithium titanium oxide comprising spherical particle aggregates with a diameter of from 1 to 80 µm which consist of lithium titanium oxide primary particles coated with carbon, wherein the lithium titanium oxide has a BET surface area in the range of 1-10 m²/g.

2. Lithium titanium oxide according to claim 1 with a primary particle size of < 1 µm.

3. Lithium titanium oxide according to claim 2 with a carbon content of 0.05 to 2 wt %.

4. Lithium titanium oxide according to claim 3 with a carbon content of 0.05 to 0.5 wt %.

5. Lithium titanium oxide according to one of the preceding claims, wherein the lithium titanium oxide is Li₄Ti₅O₁₂.

6. Process for the production of carbon-containing lithium titanium oxide according to one of claims 1 to 5 comprising the steps of:
(a) mixing a lithium salt, a titanium oxide and a carbon-containing compound in a solvent;
(b) spray drying the mixture from step a); and
(c) calcining the dried mixture from step b) under an atmosphere of inert gas.

7. Process according to claim 6, wherein the solvent is water.

8. Process according to claim 7, wherein the atomic ratio Li/Ti is set to 4:5.

9. Process according to claim 7 or 8, wherein the lithium salt is selected from the group consisting of LiOH, Li₂O, LiNO₃, LiHCO₃, LiCH₃COO.

10. Process according to claim 8, wherein the TiO₂ is used in anatase form or in amorphous form.

11. Process according to claim 10, wherein the carbon-containing compound is selected from the group consisting of hydrocarbons and their derivatives, carbohydrates and their derivatives, and polymers.

12. Process according to claim 11, wherein the carbon-containing compound is selected from sugars of the group consisting of lactose, sucrose and saccharose.

13. Process according to claim 6, wherein the spray drying is carried out with a temperature gradient of 90-350 °C.

14. Process according to one of the preceding claims, wherein the calcination is carried out at a temperature of 700 to 1000 °C.

15. Electrode, comprising the carbon-containing lithium titanium oxide according to one of claims 1 to 5.

16. Lithium ion secondary battery comprising an electrode according to claim 15.

17. Lithium ion secondary battery according to claim 16 with a charge/discharge capacity at C/10 of > 165 mAh/g.

## Revendications

1. Oxyde de titane lithié possédant une teneur en carbone contenant des agrégats de particules sphériques dont le diamètre s'élève de 1 à 80 µm, qui sont constitués par des particules primaires d'oxyde de titane lithié enduites de carbone, dans lequel l'oxyde de titane lithié possède une surface BET dans la plage de 1 à 10 m²/g.

2. Oxyde de titane lithié selon la revendication 1, dont la granulométrie des particules primaires est inférieure à 1 µm.

3. Oxyde de titane lithié selon la revendication 2, possédant une teneur en carbone s'élevant de 0,05 à 2 % en poids.

4. Oxyde de titane lithié selon la revendication 3, possédant une teneur en carbone s'élevant de 0,05 à 0,5 % en poids.

5. Oxyde de titane lithié selon l'une quelconque des revendications précédentes, dans lequel l'oxyde de titane lithié est Li₄Ti₅O₁₂.

6. Procédé pour la préparation d'oxyde de titane lithié possédant une teneur en carbone selon l'une quelconque des revendications 1 à 5, comprenant les étapes dans lesquelles :
(a) on mélange un sel de lithium, un oxyde de titane et un composé contenant du carbone dans un solvant ;
(b) on sèche par pulvérisation le mélange obtenu à l'étape a) ;
(c) on calcine le mélange séché de l'étape b) sous l'atmosphère d'un gaz de protection.

7. Procédé selon la revendication 6, dans lequel le solvant est de l'eau.

8. Procédé selon la revendication 7, dans lequel le rapport atomique Li/Ti est réglé à 4:5.

9. Procédé selon la revendication 7 ou 8, dans lequel le sel de lithium est choisi parmi le groupe constitué par LiOH, Li₂O, LiNO₃, LiHCO₃, LiCH₃COO.

10. Procédé selon la revendication 8, dans lequel le TiO₂ est utilisé sous sa forme anatase ou sous sa forme amorphe.

11. Procédé selon la revendication 10, dans lequel le composé contenant du carbone est choisi parmi le groupe constitué par des hydrocarbures et leurs dérivés, des hydrates de carbone et leurs dérivés, et des polymères.

12. Procédé selon la revendication 11, dans lequel le composé contenant du carbone est choisi parmi des sucres du groupe constitué par le lactose, le sucrose et le saccharose.

13. Procédé selon la revendication 6, dans lequel le séchage par pulvérisation est mis en oeuvre à un gradient de température de 90 à 350 °C.

14. Procédé selon l'une quelconque des revendications précédentes, dans lequel la calcination est mise en oeuvre à une température de 700 à 1.000 °C.

15. Électrode contenant l'oxyde de titane lithié possédant une teneur en carbone selon l'une quelconque des revendications 1 à 5.

16. Batterie secondaire aux ions lithium contenant une électrode selon la revendication 15.

17. Batterie secondaire aux ions lithium selon la revendication 16 possédant une capacité de charge/décharge à C/10 supérieure à 165 mAh/g.
